# EUROPÄISCHE PATENTSCHRIFT

(11) **EP 1 967 827 B1**
(45) Veröffentlichungstag und Bekanntmachung des Hinweises auf die Patenterteilung: **06.06.2018**
(21) Anmeldenummer: 07004568.7
(22) Anmeldetag: 06.03.2007
(51) Int. Cl.: G01F 1/32, G01F 15/14

(54) **Wirbelströmungsmesser zur Erfassung der Strömungsgeschwindigkeit in einer Leitung**
Swirl flow meter for recording the flow velocity in a line
Débitmètre à tourbillon pour la saisie de la vitesse d'écoulement dans une canalisation

(43) Veröffentlichungstag der Anmeldung: 10.09.2008
(73) Patentinhaber: Grundfos Management A/S, 8850 Bjerringbro (DK)
(72) Erfinder: Krog, Jens Peter, Torup 8860 Ulstrup (DK); Jacobsen, Kjeld Winther, Oster Bjerregrav 8900 Randers (DK)
(74) Vertreter: Vollmann, Heiko

(56) Entgegenhaltungen:
- DE-A1- 2 426 169
- JP-A- 4 099 916
- US-A- 3 698 245
- US-A- 4 884 458
- US-A- 4 926 532
- US-A- 4 973 062

## Beschreibung

Die Erfindung betrifft eine Anordnung zur Erfassung der Strömungsgeschwindigkeit in einer Leitung mit den im Oberbegriff des Anspruchs 1 angegebenen Merkmalen.

Derartige Anordnungen sind Teil einer Vortex-Flow-Messeinrichtung, bei der zur Erfassung der Strömungsgeschwindigkeit in einer Leitung eine Obstruktion, typischerweise ein die Leitung quer zur Strömungsrichtung durchsetzender Körper sowie mit Abstand dazu ein Sensor angeordnet wird, wobei der Sensor mit einer elektronischen Auswerteinrichtung verbunden ist, welche anhand des elektrischen Signals des Sensors die Strömungsgeschwindigkeit ermittelt. Durch den Körper wird in der Leitung ein Wirbel erzeugt, der in Abhängigkeit der Strömungsgeschwindigkeit partielle Druckschwankungen erzeugt, die beispielsweise mittels eines Differenzdrucksensors erfasst werden. Anhand der Frequenz der Druckänderungen kann auf die Strömungsgeschwindigkeit innerhalb der Leitung geschlossen werden. Eine solche Einrichtung ist in EP 1 434 034 A1 beschrieben.

Zwar sind solche Messeinrichtungen vergleichsweise kostengünstig herzustellen und arbeiten auch über lange Zeit zuverlässig und stabil, doch ist für die Genauigkeit des Messergebnisses von ganz entscheidender Bedeutung, dass die geometrischen Verhältnisse der Messstrecke exakt eingehalten werden. Insbesondere wenn vergleichende Messungen erfolgen sollen ist es zwingend erforderlich, dass exakt gleiche Leitungsquerschnitte und eine stets gleich bleibende Anordnung von Obstruktion und Sensor sichergestellt ist. Dabei sollte auch eine möglichst gleich bleibende Rautiefe der Innenwandung gegeben sein, um vergleichbare Strömungssituationen herstellen zu können.

Dies ist gegeben, wenn die Messeinrichtung als gesonderte Messeinrichtung konzipiert ist, wie sie aus US 4,884,458, US 4,973,062 und JP 4-99916 zum Stand der Technik zählt. Dort ist die Messeinrichtung in ein leitungsähnliches Gehäuse integriert, in dem die entsprechenden Einbauten vorgenommen sind. Die Gehäuseenden sind so ausgebildet, dass diese über übliche Leitungsverbindungen mit entsprechenden Leitungsanschlüssen verbunden werden können. Derartige Geräte sind jedoch vergleichsweise aufwendig und teuer und nicht zur Eingliederung in vorhandene Leitungen geeignet, sie können jeweils nur vor Ort an eine Leitung angeschlossen bzw. zwischen zwei Leitungsenden eingegliedert werden.

Noch präziser aber auch wesentlich bauaufwendiger sind die aus US 4,926,532 und US 3,698,245 bekannten Bauausführungen, die auch eine deutliche radiale Erstreckung haben.

Insoweit günstiger ist der aus DE 24 26 169 A1 bekannte Wirbelströmungsmesser, der als Einsatz ausgebildet ist und lediglich einen Halteflansch aufweist, der zwischen zwei Flansche einer Flanschverbindung eingegliedert werden kann. Allerdings stellt die dort beschriebene Anordnung einen erheblichen Strömungswiderstand innerhalb der Leitung dar. Auch ist die Eingliederung des Fühlers problematisch, der im Übrigen nur nach Ausbau der gesamten Messanordnung ausgetauscht werden kann, was aufwendig ist, da die Leitungsflansche, zwischen denen die Messanordnung eingegliedert ist, nicht nur zu lösen, sondern soweit zu beabstanden ist, dass der Rohrabschnitt herausziehbar ist.

Vor diesem Hintergrund liegt der Erfindung die Aufgabe zugrunde, eine gattungsgemäße Messanordnung so auszubilden, dass sie einerseits einfach und kostengünstig herstellbar ist, andererseits jedoch eine hohe Messgenauigkeit, zumindest Reproduzierbarkeit der Messergebnisse gewährleistet und in vorhandene Leitungssysteme eingliederbar ist.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die erfindungsgemäße Anordnung zur Erfassung der Strömungsgeschwindigkeit in einer Leitung ist mit einer in einem Leitungsabschnitt angeordneten Obstruktion und einen in Strömungsrichtung dahinter und vorzugsweise mit Abstand dazu angeordnetem Sensor ausgestattet, wobei mindestens im Bereich von Sensor und Obstruktion eine Hülse vorgesehen ist, die einen vorbestimmten Innenquerschnitt aufweist.

Unter gleich bleibender Innenquerschnitt im Sinne der Erfindung ist der Querschnittsbereich zu verstehen, der nicht durch Obstruktion oder Sensor beeinflusst ist.

Grundgedanke der vorliegenden Erfindung ist es somit, durch Einsatz einer Hülse im Bereich der Messanordnung reproduzierbare und genaue Messergebnisse zu erzielen ohne bauliche Veränderungen an der Leitung selbst vornehmen zu müssen. So können durch Einsatz der erfindungsgemäßen Hülse definierte Strömungsverhältnisse eingestellt werden, ohne dass die Innenwand der Leitung besonders bearbeitet werden muss. Es können somit Leitungen aus Metallguss, Kunststoffspritzguss oder auch aus gezogenen Rohren eingesetzt werden, ohne dass dies Einfluss auf die Messung hat. Es können bei geeigneter Ausbildung der Hülse auch Leitungen mit zumindest geringfügig unterschiedlichen Innenlumen mit einer solchen Messanordnung ausgestattet werden, ohne dass dies Einfluss auf das Messergebnis hat, da die Messung stets im Inneren der Hülse stattfindet, wo ein vorbestimmter Innenquerschnitt gegeben ist.

Erfindungsgemäß ist es vorgesehen, zwischen der Außenseite und der Hülse der umgebenden Leitungswand Dichtmittel, beispielsweise in Form von O-Ringen oder dergleichen vorzusehen, welche sicherstellen, dass zwischen Hülse und Leitungswand keine Flüssigkeit strömt und dass die Hülse im entsprechenden Leitungsabschnitt festsitzt. Darüber hinaus können Dichtmittel zwischen der Außenseite der Hülse und der umgebenden Leitungswand auch vorgesehen sein, um beispielsweise eine Abdichtung im Bereich des Sensors zu gewährleisten, wie dies weiter unten noch im Einzelnen beschrieben wird.

Um definierte Strömungsverhältnisse und damit eine möglichst hohe Messgenauigkeit zu erzielen ist gemäß der Erfindung nicht nur der Bereich von Sensor und Obstruktion durch eine Hülse mit vorgebestimmtem Innenquerschnitt gebildet sondern die Hülse anströmseitig verlängert, indem in Strömungsrichtung mit Abstand vor der Obstruktion ein Einlaufbereich gebildet wird, in welchem sich der Innenquerschnitt zum anströmseitigen Ende hin stetig nach außen erweitert, wobei die Hülse in Strömungsrichtung hinter dem Einlaufbereich einen etwa gleich bleibenden Innenquerschnitt aufweist. Durch diese Ausbildung ist sichergestellt, dass ein verwirbelungsarmer Strömungsübergang von der Leitungswandung in die Hülse hinein erfolgt und dass aufgrund des sich daran anschließenden Bereichs mit gleich bleibendem Innenquerschnitt sich stabile Strömungsverhältnisse einstellen, die eine exakte Messung ermöglichen.

Erfindungsgemäß ist die Hülse durch ein Kunststoffspritzgussteil gebildet, dieses kann die mit hoher geometrischer Genauigkeit, hoher Oberflächengüte und kostengünstig gefertigt werden, erfüllt jedoch zugleich alle Anforderungen an den vorbestimmten Innerquerschnitt. Eine solche Hülse hat weiterhin den Vorteil, dass sie in angemessenen Zeitabständen durch den Servicetechniker ausgetauscht werden kann, sodass selbst unter ungünstigen Verhältnissen, d.h. z.B. in Leitungen, welche heißes Wasser führen und somit kesselsteingefährdet sind, etwaige Ablagerungen, die das Messergebnis verfälschen könnten, zusammen mit der Hülse schnell und einfach entfernt werden können. Da derartige Kunststoffspritzgussteile in der Fertigung kostengünstig hergestellt werden können, wenn erst einmal ein entsprechendes Werkzeug bereitgestellt ist, kann ein Austausch einer solchen Hülse kostengünstig erfolgen.

Die Obstruktion einer solchen Vortex-Flow-Messeinrichtung kann auf vielfältige Weise gebildet sein, erfindungsgemäß wird jedoch ein quer in den Strömungsquerschnitt hineinragender oder diesen durchsetzender Körper eingesetzt, der beispielsweise einen dreieckigen Querschnitt hat und an einer Querseite angeströmt wird. Ein solcher Körper ist gemäß der Erfindung einstückig mit der Hülse ausgebildet. Eine solche Hülse kann ohne verlorenen Kern hergestellt werden, also mit einem Werkzeug mit wiederverwendbaren Ziehkernen. Die einstückige Ausbildung mit der Hülse erleichtert Montag und Wartung und sorgt zudem dafür, dass der Körper stets an der vorbestimmten Stelle in der Hülse angeordnet ist.

Soweit es den Sensor angeht, ist dieser vorteilhaft quer zur Leitung eingesetzt. Hierzu ist in der Leitungswand und dazu fluchtend in der Hülse jeweils eine Ausnehmung vorgesehen, durch welche der Sensor eingeführt werden kann.

Gemäß einer Weiterbildung der Erfindung kann die Hülse vorteilhaft ein in den Strömungsquerschnitt ragendes Gehäuse für den Sensor aufweisen, das vorzugsweise ebenfalls einstückig mit der Hülse ausgebildet ist.

Eine solche Gehäuseanordnung hat den Vorteil, dass die Abdichtung des Sensors wesentlich vereinfacht wird und stellt darüber hinaus sicher, dass die geometrische Anordnung von Obstruktion und Sensor stets die gleiche ist und praktisch nicht toleranzbehaftet ist.

Wenn als Sensor, was zum Stand der Technik zählt, ein Differenzdrucksensor eingesetzt wird, dann wird zweckmäßigerweise das Sensorgehäuse an zwei gegenüberliegenden Seiten eine Durchbrechung aufweisen und der Sensor so in das Gehäuse eingegliedert, dass eine der beiden zu Erfassung des Differenzdrucks vorgesehenen Sensorflächen mit einer der Durchbrechungen und die andere Fläche mit der anderen Durchbrechung leitungsverbunden ist, wobei innerhalb des Gehäuses Dichtmittel zwischen Sensor und Gehäuse vorgesehen sind, die einen hydraulischen Kurzschluss der Sensorflächen sowie darüber hinaus ein Eindringen von Fluid über die Sensorflächen hinaus verhindert. Eine solche Abdichtung kann in einfacher Weise durch O-Ringe erfolgen, welche jeweils einerseits am Rand einer Durchbrechung und andererseits am Rand einer Messfläche des Sensors anliegen. Bei entsprechender Ausgestaltung des Sensors können zu beiden Seiten O-Ringe anliegen, die mit Einschieben des Sensors in das Sensorgehäuse in ihre bestimmungsgemäße, die jeweilige Durchbrechung umgebende Lage einnehmen.

Vorteilhaft sind insbesondere bei der vorbeschriebenen Sensorgehäuseanordnung zwischen Hülse und Leitungswand zwei mit Abstand zueinander angeordnete umlaufende Dichtringe, vorzugsweise O-Ringe vorgesehen, und zwar derart, dass mindestens das Sensorgehäuse in dem Bereich zwischen den O-Ringen angeordnet ist. Auf diese Weise kann insbesondere in Kombination mit der vorbeschriebenen Abdichtung zwischen Sensorgehäuse und Differenzdrucksensor auf eine weitere Abdichtung zwischen Gehäuse und Hülse bzw. zwischen dem Gehäuse und dem Kupplungsgehäuse bzw. dem elektrischen Anschluss verzichtet werden. Die Dichtringe dichten aber nicht nur den Raum zwischen Hülse und Leitungswand ab, sondern können ggf. darüber hinaus auch für den festen Sitz der Hülse in dem Leitungsabschnitt sorgen.

Andererseits kann das Sensorgehäuse auch unabhängig von der Hülse ausgebildet sein, dann ragt es in moniertem Zustand vorteilhaft in den Strömungsweg innerhalb der Hülse. Mit dem leitungsseitigen Ende sitzt das Sensorgehäuse vorteilhaft an einem Ende eines Kupplungsgehäuses, das an der Leitungswand vorzugsweise lösbar befestigt ist und über das die elektrische Leitungsverbindung des Sensors erfolgt. Dabei kann das Sensorgehäuse lösbar am Kupplungsgehäuse angebracht sein, sodass hier eine elektrische und mechanische Trennstelle zwischen Sensorgehäuse und Kupplungsgehäuse einerseits und zwischen Sensor und Leitungsanschluss andererseits gegeben ist.

Auch kann gemäß einer Weiterbildung der Erfindung im Bereich der Ausnehmung in der Leitungswand, welche zum Einführen des Sensors vorgesehen ist, ein Teil einer elektrischen Kupplung zum Anschluss des Sensors angeordnet sein, dessen anderer Teil am Ende des entsprechenden Anschlusskabels angeordnet ist. Es kann also eine Art Steckverbindung in diesem Bereich der Leitungswand vorgesehen sein. Hierzu ist vorteilhaft an der Leitungswand die Ausnehmung durch einen ringförmigen Kragen umgeben, welcher die Steckverbindung mechanisch stabilisiert.

Die Erfindung ist nachfolgend anhand von in der Zeichnung dargestellten Ausführungsbeispielen näher erläutert. Es zeigen:
- Fig. 1: einen Längsschnitt durch einen Leitungsabschnitt mit darin befindlicher Messanordnung,
- Fig. 2: eine Schnitt längs der Schnittlinie II-II in Fig. 1,
- Fig. 3: eine alternative Ausbildung der Messanordnung in Darstellung gemäß Fig. 1,
- Fig. 4: eine Explosionsdarstellung der Messanordnung gemäß Figur 3,
- Fig. 5: eine weitere Ausführungsvariante in Darstellung gemäß Fig. 1,
- Fig. 6: eine Explosionsdarstellung der Variante gemäß Fig. 5,
- Fig. 7a: eine andere Ausführungsvariante in Darstellung nach Fig. 1,
- Fig. 7b: die Ausführungsvariante nach Fig. 7a ohne Hülse und
- Fig. 8: eine Explosionsdarstellung der Ausführung gemäß Fig. 7b

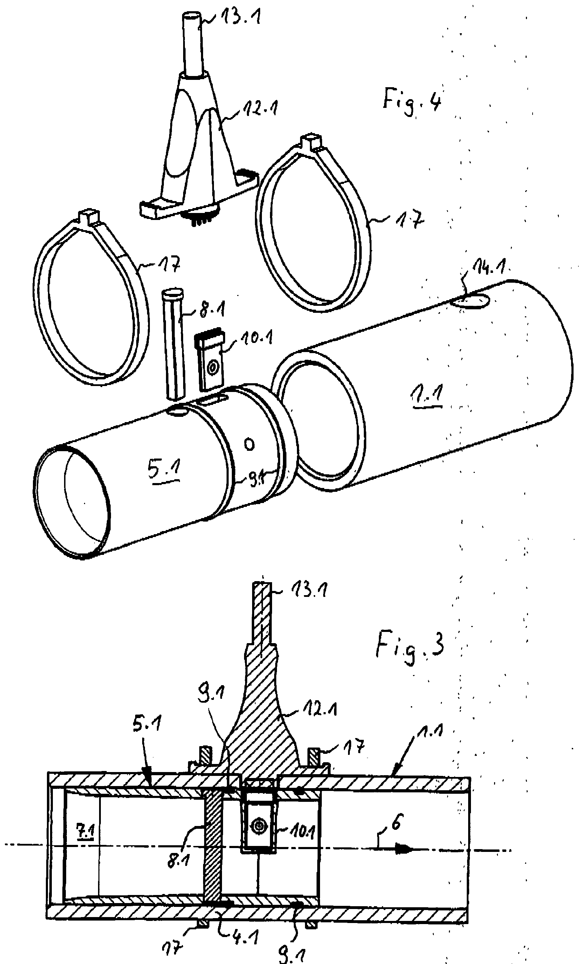

Die anhand der Figuren 3 und 4 sowie 7b und 8 dargestellten Ausführungsvarianten gehören nicht zur Erfindung.

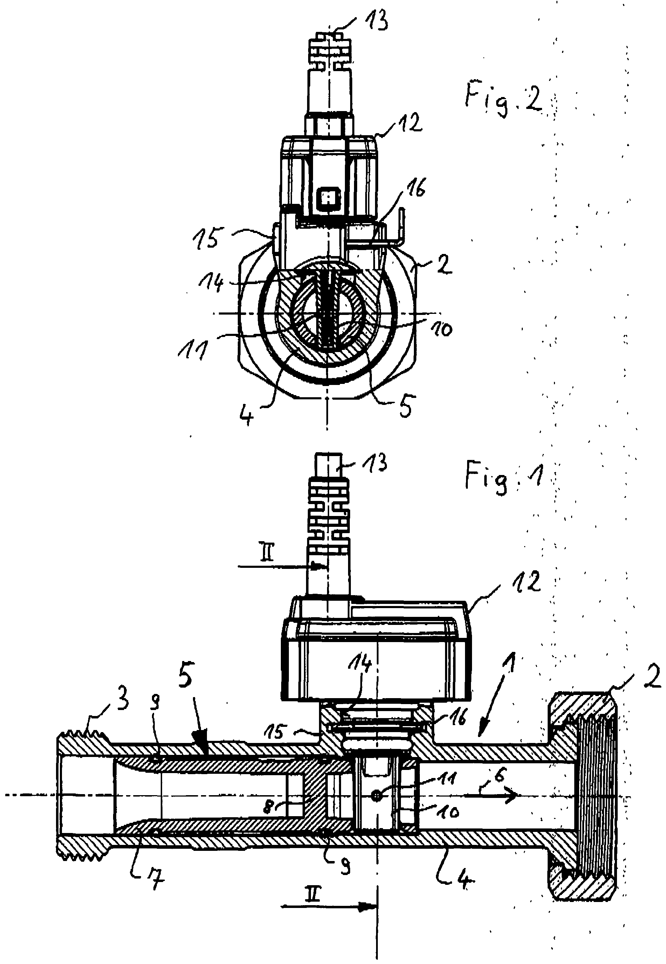

Bei der anhand der Figuren 1 und 2 dargestellten Messanordnung ist ein Leitungsabschnitt 1 durch ein Fitting gebildet, welches an beiden Enden mit Gewindeanschlüssen 2 und 3 versehen und zur Eingliederung in eine Rohrleitung bestimmt ist. Dieses Fitting ist aus einer Messinglegierung gefertigt, kann jedoch auch aus Kunststoff bestehen. Der Leitungsabschnitt 1 ist gradlinig ausgebildet und an der Innenseite der Leitungswand 4 mit einer Hülse 5 versehen, die sich über mehr als die Hälfte der Länge des Leitungsabschnittes 1 erstreckt.

Die Hülse 5 hat im Wesentlichen hohlzylindrische Form und weist in Strömungsrichtung 6 der Leitung gesehen eingangseitig einen Einlaufbereich 7 auf, welcher den Übergang zwischen dem Innenquerschnitt der Leitungswand 4 und dem vorbestimmten Innenquerschnitt in Strömungsrichtung 6 dahinter liegenden Bereich der Hülse 5 bildet. Im Einlaufbereich 7 verjüngt sich der Querschnitt der Hülse 5 stetig um eine möglichst wirbelfreie Einleitung der Strömung in den in Strömungsrichtung 6 dahinter liegenden Messbereich zu gewährleisten. Der Einlaufbereich 7 erstreckt sich über etwa 15% der Gesamtlänge der Hülse. An den Einlaufbereich 7 schließt sich der übrige Bereich der Hülse 5 an, der einen im Wesentlichen konstanten Innerquerschnitt aufweist, der lediglich zum abströmseitigen Ende leicht aufgeweitet ausgebildet ist.

Nach etwa 2/3 der Gesamtlänge der Hülse 5 ist eine Obstruktion in Form eines die Hülse 5 quer zur Strömungsrichtung 6 durchsetzenden schmalen Körpers 8 gebildet. Dieser Körper 8 ist im Querschnitt dreieckig ausgebildet, weist mit einer Flachseite zur Anströmseite hin und mit einer Kante zur Abströmseite. Der Körper 8 ist mit der Hülse 5 einstückig als Kunststoffspritzgussteil ausgebildet. Die Hülse 5 ist in den Leitungsabschnitt 1 vom Gewindeanschluss 3 aus eingesteckt und dort durch zwei umlaufende O-Ringe 9 gehalten, die gleichzeitig für eine Abdichtung zwischen der Außenseite der Hülse 5 und der Innenseite der Leitungswand 4 sorgen.

In Strömungsrichtung 6 mit Abstand hinter dem Körper 8 weist die Hülse 5 zwei zueinander fluchtend und diametral angeordnete Ausnehmungen auf, die so angeordnet sind, dass ein Sensorgehäuse 10 in diese derart eingliederbar ist, dass das Sensorgehäuse 10 in Strömungsrichtung 6 mit seinen Schmalseiten in Flucht zum Körper 8 angeordnet ist. Das Sensorgehäuse weist an seinen Flachseiten mittig jeweils eine Durchbrechung 11 auf, über die es mit einer druckwirksamen Fläche des in dem Gehäuse 10 angeordneten Differenzdrucksensors leitungsverbunden ist. Die in Fig. 1 nicht sichtbare, auf der anderen Seite des Gehäuses 10 befindliche Durchbrechung ist mit der anderen Sensorfläche des Sensors verbunden. Die Sensorflächen sind von O-Ringen umgeben, welche den Sensor gegenüber dem Gehäuse 10 abdichten und somit ein Eindringen von Fluid in das übrige Gehäuse verhindern.

Das Sensorgehäuse 10 sitzt an einem Kupplungsgehäuse 12, in das rückseitig eine elektrische Leitung 13 eingeführt ist, über die der elektrische Anschluss des Differenzdrucksensors erfolgt. Das Kupplungsgehäuse weist einen zapfenförmigen Abschnitt auf, dessen Stirnseite das Sensorgehäuse 10 trägt. Dieser zapfenförmige Abschnitt ist in einer entsprechend ausgebildeten Ausnehmung 14 des Leitungsabschnitts 1, die randseitig mit einem Ringwulst 15 verstärkt ist, eingegliedert, gegenüber dem Ringwulst 15 abgedichtet und mittels eines aus Blech gefertigten Riegels 16 formschlüssig dort festgelegt.

Bei der anhand der Figuren 1 und 2 dargestellten (Fitting)-Variante kann der Sensor zusammen mit dem Sensorgehäuse und dem Kupplungsgehäuse quer zur Durchströmungsrichtung 6 nach Lösen des Riegels 16 herausgezogen werden, wonach die Hülse 5 ebenfalls entfernt bzw. ersetzt werden kann. Da die gesamte Messstrecke innerhalb der Hülse 5 liegt, ist die Ausbildung des Leitungsabschnittes 1 für die Genauigkeit der Messung unerheblich, kann also mit vergleichsweise großen Toleranzen kostengünstig gefertigt werden. Das in innen liegende Spritzgussteil 5 bildet die eigentliche Messstrecke, ist hinsichtlich der Wandungsoberfläche optimiert und kann genauso wie der Sensor selbst ausgewechselt werden, ohne das gesamte Bauteil erneuern zu müssen.

Bei den nachfolgend beschrieben Ausführungsbeispielen sind funktionell gleiche Bauteile mit gleichen Bezugsziffern versehen, die jedoch zur besseren Unterscheidung ausführungsabhängig mit einer zusätzlichen Ziffer gekennzeichnet sind. Sowohl die vorbeschriebenen als auch die im folgenden beschriebenen Varianten können ein Fitting, ein beliebiger Leitungsabschnitt als auch Teil eines Gerätes sein.

Bei der anhand der Figuren 3 und 4 dargestellten Ausführungsvariante, die nicht zur Erfindung gehört, ist der Leitungsabschnitt 1.1 ein zylindrischer Rohrabschnitt, in den eine Hülse 5.1 eingegliedert ist, die einen Einlaufbereich 7.1 aufweist. Der dort ebenfalls in Strömungsrichtung 6 mit deutlichem Abstand angeordnete, die Obstruktion bildende Körper 8.1 hat die gleiche Querschnittsform und Lage wie der vorbeschriebene Körper 8, ist jedoch nicht einstückig mit der Hülse 5.1 ausgebildet, sondern als gesondertes Bauteil, das in zwei diametral und zueinander fluchtend angeordneten Ausnehmungen in der Hülse sitzt, die nach Einfügen der Hülse 5.1 in den Leitungsabschnitt 1.1 formschlüssig gehalten ist, und zwar in Querrichtung durch die Leitungswand 4.1 und in Längsrichtung (6) durch die Hülse 5.1. Da die in Fig. 3 untere Ausnehmung an die dreieckige Querschnittsform des Körpers 8.1 angepasst ist, ist dieser somit in allen Richtungen formschlüssig fixiert.

In Strömungsrichtung 6 hinter dem Körper 8.1 ist auch hier mit Abstand das Sensorgehäuse 10.1 angeordnet, das jedoch nicht wie beim vorbeschriebenen Ausführungsbeispiel den Leitungsquerschnitt durchsetzt, sondern, wie in Fig. 3 ersichtlich ist, nur bis etwa zur Hälfte in diesen herein ragt. Im Übrigen ist Ausbildung und Anordnung wie vorbeschrieben. In der dargestellten Ausführung ist das Sensorgehäuse 10.1 in eine Längsausnehmung der Hülse 5.1 eingesetzt, die wiederum mit einer Ausnehmung 14.1 in der Leitungswand 4.1 fluchtet, in die das Kupplungsgehäuse 12.1 hinein ragt. Zwischen Kupplungsgehäuse 12.1 und Sensorgehäuse 10.1 und des darin sitzenden Differenzdrucksensors ist hier eine Schnittstelle vorgesehen, d.h. die Bauteile sind mittels einer Steckverbindung mechanisch und elektrisch trennbar. Die Befestigung des Kupplungsgehäuses 12.1 am Leitungsabschnitt 1.1 erfolgt auf einfache Weise mittels zweier jeweils den Leitungsabschnitt 1.1 und einen Teil des Kupplungsgehäuses 12.1 übergreifender Spannbänder 17. Alternativ, jedoch nicht dargestellt, kann das Sensorgehäuse 10.1 bei dieser Ausführungsvariante auch einstückig mit der Hülse 5.1 als Spritzgussteil ausgebildet sein, muss dann jedoch bündig mit dem Außenumfang der Hülse 5.1 abschließen um in den Leitungsabschnitt 1.1 eingliederbar zu sein. Die Anordnung des Differenzdrucksensors innerhalb des Gehäuses 10.1 und seine Abdichtung gegenüber dem Gehäuse ist wie vorbeschrieben.

Darüber hinaus sind bei der Ausführungsvariante wie sie anhand der Figuren 3 und 4 dargestellt ist, die O-Ringe 9.1 so angeordnet, dass in den Bereichen der Ausnehmung 14.1 zwischen Hülse 5.1 und Leitungswand 4.1 kein Fluid eindringen kann.

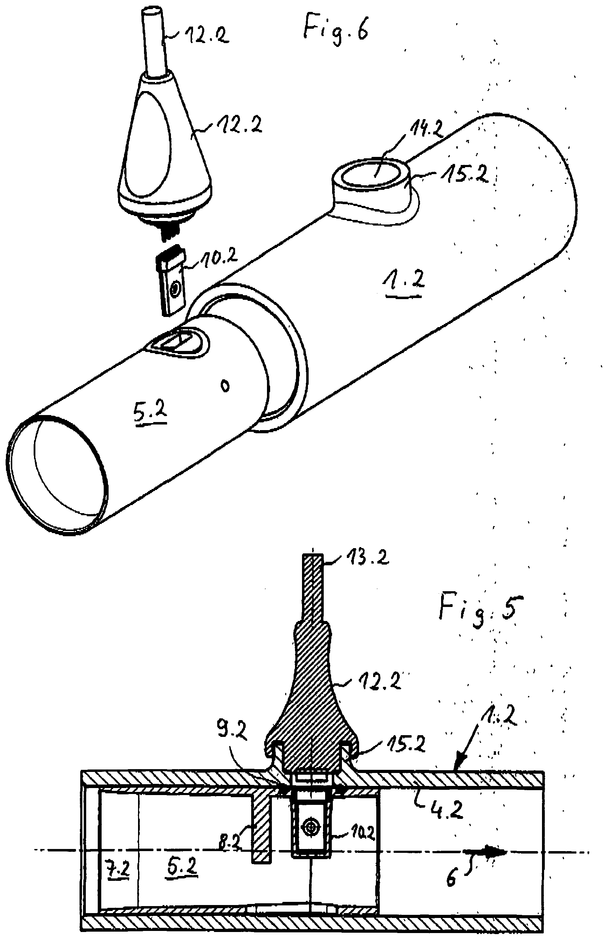

Die anhand der Figuren 5 und 6 dargestellte Ausführungsvariante weist einen Leitungsabschnitt 1.2 auf, der im Bereich der Ausnehmung 14.2 mit einem Ringwulst 15.2 versehen ist, ähnlich wie bei der Ausführung gemäß Fig. 1, der dazu vorgesehen ist, das Kupplungsgehäuse 12.2 am Leitungsabschnitt 1.2 zu befestigen und abzustützen.

Die Hülse 5.2 weist ebenfalls einen Einlaufbereich 7.2 auf und einen einstückig mit der Hülse 5.2 ausgebildeten, die Obstruktion bildenden Körper 8.2. Im Unterschied zu den beiden vorbeschriebenen Ausführungsformen ragt hier der Körper 8.2 so in den Strömungsweg hinein und durchsetzt diesen nicht. Weiterhin ist die Hülse 5.2 in die Leitungswand 4.2 dichtungsfrei eingegliedert, es ist lediglich ein O-Ring 9.2 im Bereich zwischen der Außenseite der Hülse 5.2 und der Innenseite der Leitungswand 4.2 im Bereich um die Ausnehmung 14.2 vorgesehen, jedoch nicht, wie bei den vorbeschriebenen Ausführungen um die Hülse umlaufend, sondern um das Sensorgehäuse 10.2 umlaufend. Diese Dichtung 9.2 dient also ausschließlich zur Abdichtung gegenüber der Ausnehmung 14.2.

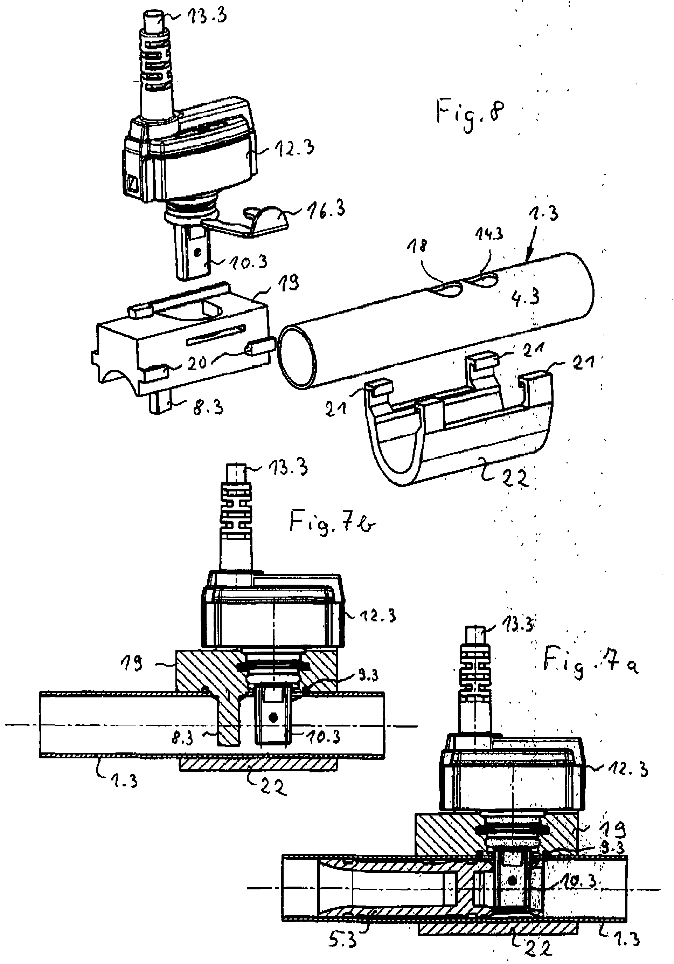

Bei der anhand der Figuren 7a, 7b und 8 dargestellten Ausführungsvariante, von der die anhand von Figur 7a dargestellte Variante zur Erfindung gehört, ist der Leitungsabschnitt 1.3 durch einen Rohrabschnitt gebildet, dies kann z.B. ein Kupfer- oder Kunststoffrohr sein, wie es zu Leitungsverbindung heutzutage üblicherweise installiert wird. In den Leitungsabschnitt 1.3 ist eine Hülse 4.3 eingegliedert, die ebenfalls einen Einlaufabschnitt 7.1 aufweist, jedoch im Übrigen lediglich zwei Ausnehmungen, nämlich für den die Obstruktion bildenden Körper 8.3 und für das Sensorgehäuse 10.3. Fluchtend zu diesen Ausführungen sind zwei Ausnehmungen, nämlich eine Ausnehmung 14.3 für das Sensorgehäuse 10.3 und eine weitere Ausnehmung 18 für den Körper 8.3 vorgesehen, die zu den entsprechenden Ausnehmungen in der Hülse 4.3 fluchten. Die Ausbildung und Anordnung des Sensorgehäuses 10.3, des zapfenartigen Vorsprungs und des Kupplungsgehäuses 12.3 entspricht exakt der anhand der Figuren 1 und 2 entsprechend beschriebenen Bauteile, auf die insoweit verweisen wird. Im Unterschied dazu ist jedoch eine Montage 19 vorgesehen, die an ihrer Unterseite an die Krümmung der Wand 4.3 angepasst ist und die eine Aufnahme zur formschlüssigen Festlegung des das Sensorgehäuse 10.3 tragenden Zapfens an der in den Figuren Unterseite des Kupplungsgehäuses 12.3 aufweist. Die Montage 19 weist weiterhin an beiden Längsseiten zwei Vorsprünge 20 auf, die mit hakenförmigen, die Vorsprünge 20 im montierten Zustand übergreifenden Teilen 21 korrespondieren und zusammenwirken, die Teil eines Spannkörpers 22 bilden, mit der die Montage 19 am Leitungsabschnitt 1.3 festlegbar ist. Die Montage 19 weist an ihrer Unterseite den Körper 8.3 auf, der durch die Ausnehmung 18 in das Leitungsinnere ragt. Abgedichtet ist die Montage 19 gegenüber dem Außenumfang der Leitungswandung 4.3 über einen um den Körper 8.3 und das Sensorgehäuse 10.3 umlaufenden O-Ring 9.3.

Da die Montage 19 mit dem Spannkörper 22 ohne Weiteres nach Schaffung der Ausnehmungen 18 und 14.3 im Leitungsabschnitt 1.3 eingliederbar und am Leitungsabschnitt 1.3 festlegbar ist und das Sensorgehäuse 10.3 mit dem darin befindlichen Differenzdrucksensor und dem Kupplungsgehäuse 12.3 ebenfalls von außen eingliederbar und an der Montage 19 festlegbar ist, kann hiermit ggf. eine Messanordnung geschaffen werden, die ohne Zugang zum Leitungsabschnitt 1.3 von innen geschaffen werden kann, wie dies anhand der Figuren 7b und 8 (nicht zur Erfindung gehörend) dargestellt ist. Es muss dann allerdings auf die Hülse 5.3 verzichtet werden, was grundsätzlich wegen der eingangs erläuterten Vorteile nicht erstrebenswert ist. Es bildet jedoch eine einfache und mit Abstrichen brauchbare Messanordnung, die ausschließlich durch Zugang von außen geschaffen werden kann.

## Patentansprüche

1. Anordnung zur Erfassung der Strömungsgeschwindigkeit in einer Leitung mit einer in einem Leitungsabschnitt (1) angeordneten Obstruktion (8) und einem in Strömungsrichtung (6) dahinter angeordneten Sensor, wobei mindestens im Bereich von Sensor und Obstruktion (8) eine Hülse (5) mit vorbestimmtem Innenquerschnitt vorgesehen ist, die Obstruktion (8) durch einen in den Strömungsquerschnitt hineinragenden oder diesen durchsetzenden Körper (8) gebildet ist, der einstückig mit der Hülse (5) ausgebildet ist, **dadurch gekennzeichnet, dass** die Hülse (5) einen in Strömungsrichtung (6) mit Abstand vor der Obstruktion (8) liegenden Einlaufbereich (7) aufweist, in welchem sich der Innenquerschnitt zum anströmseitigen Ende hin stetig nach außen erweitert, dass die Hülse (5) in Strömungsrichtung (6) hinter dem Einlaufbereich (7) einen im Wesentlichen gleich bleibenden Innenquerschnitt aufweist, dass in der Leitungswand (4) und dazu fluchtend in der Hülse (5) jeweils eine Ausnehmung (14) vorgesehen ist, durch welche der Sensor geführt ist, dass zwischen der Außenseite der Hülse (5) und der umgebenden Leitungswand (4) Dichtmittel (9) vorgesehen sind und dass die Hülse (5) durch ein Kunststoffspritzgussteil gebildet ist.

2. Anordnung nach Anspruch 1, **dadurch gekennzeichnet, dass** die Hülse (5) ein in den Strömungsquerschnitt ragendes Gehäuse (10) für den Sensor aufweist, das einstückig mit der Hülse (5) ausgebildet ist.

3. Anordnung nach Anspruch 2, **dadurch gekennzeichnet, dass** das Gehäuse (10) an zwei gegenüberliegenden Seiten eine Durchbrechung (11) aufweist, dass der Sensor ein Differenzdrucksensor ist, der mit den Durchbrechungen (11) zur Erfassung des Differenzdrucks zwischen den Durchbrechungen (11) leitungsverbunden ist, und dass innerhalb des Gehäuses (10) Dichtmittel zwischen Sensor und Gehäuse (10) vorgesehen sind.

4. Anordnung nach einem der vorhergehenden Ansprüche, **dadurch gekennzeichnet, dass** die Dichtmittel durch zwei zwischen der Hülse (5.1) und der Leitungswand (4) angeordnete umlaufende Dichtungen, vorzugsweise O-Ringe (9.1) gebildet sind, die mit Abstand zueinander angeordnet sind, wobei zwischen den Dichtungen (9.1) mindestens das Gehäuse (10.1) für den Sensor angeordnet ist.

5. Anordnung nach einem der vorhergehenden Ansprüche, **dadurch gekennzeichnet, dass** der Sensor in einem Sensorgehäuse (10) angeordnet ist, das in den Strömungsweg innerhalb der Hülse (5) ragt und das an einem Ende eines Kupplungsgehäuses (12) sitzt, das an der Leitungswand (4) vorzugsweise lösbar befestigt ist und über das die elektrische Leitungsverbindung des Sensors erfolgt.

6. Anordnung nach einem der vorhergehenden Ansprüche, **dadurch gekennzeichnet, dass** im Bereich der Ausnehmung (14) in der Leitungswand (4) ein Teil einer elektrischen Kupplung zum Anschluss des Sensors gebildet ist, deren anderer Teil (12) am Ende des entsprechenden Anschlusskabels (13) angeordnet ist.

## Claims

1. An arrangement for detecting the flow speed in a conduit with an obstruction (8) which is arranged in a conduit section (1) and with a sensor arranged downstream of this in the flow direction (6), wherein a sleeve (5) with a predefined inner cross section is provided at least in the region of the sensor and obstruction (8), the obstruction is (8) is formed by a body (8) which projects into the flow cross section or passes through this and which is formed as one piece with the sleeve (5), **characterised in that** the sleeve (5) comprises a run-in region (7) which lies at a distance upstream of the obstruction (8) in the flow direction (6), in which run-in region the inner cross section widens continuously outwards towards the on-flow-side end, that the sleeve (5) has an essentially constant inner cross section downstream of run-in region (7) in the flow direction (6), that a recess (14) through which recess the sensor is led is provided in the conduit wall (4) and, aligned thereto, in the sleeve (5), that sealing means (9) are provided between the outer side of the sleeve (5) and the surrounding conduit wall (4) and that the sleeve (5) is formed by a plastic injection moulded part.

2. An arrangement according to claim 1, **characterised in that** the sleeve (5) comprises a housing (10) for the sensor, said housing projecting into the flow cross section and being designed as one piece with the sleeve (5).

3. An arrangement according to claim 2, **characterised in that** the housing (10) comprises an opening (11) at two opposite sides, that the sensor is a differential pressure sensor which is conductively connected to the openings (11) for detecting the differential pressure between the openings (11) and that sealing means are provided within the housing (10) between the sensor and the housing (10).

4. An arrangement according to one of the preceding claims, **characterised in that** the sealing means are formed by two peripheral seals, preferably O-rings (9.1) which are arranged between the sleeve (5.1) and the conduit wall (4) and at a distance to one another, wherein at least the housing (10.1) for the sensor is arranged between the seals (9.1).

5. An arrangement according to one of the preceding claims, **characterised in that** the sensor is arranged in a sensor housing (10) which projects into the flow path within the sleeve (5) and which is seated at one end of a coupling housing (12), said coupling housing preferably being releasably fastened to the conduit wall (4) and via which the electrical lead connection of the sensor is effected.

6. An arrangement according to one of the preceding claims, **characterised in that** a part of an electrical coupling for connection of the sensor is formed in the region of the recess (14) in the conduit wall (4), the other part (12) of said coupling being arranged at the end of the respective connection cable (13).

## Revendications

1. Système de détection de la vitesse d'écoulement dans un conduit, comprenant une obstruction (8) disposée dans une partie de conduit (1) et un capteur disposé en aval dans la direction d'écoulement (6), dans lequel est prévu, au moins dans la région du capteur et de l'obstruction (8), un manchon (5) ayant une section transversale intérieure prédéterminée, et dans lequel l'obstruction (8) est formée par un corps (8) faisant saillie dans la section transversale d'écoulement ou traversant celle-ci, lequel est réalisé d'un seul tenant avec le manchon (5), **caractérisé en ce que** le manchon (5) présente une région d'entrée (7) disposée à une certaine distance en amont de l'obstruction (8) dans la direction d'écoulement (6), dans laquelle la section transversale intérieure s'élargit en continu vers l'extérieur en direction du côté amont de l'écoulement, **en ce que** le manchon (5) présente, dans la direction d'écoulement (6) en aval de la région d'entrée (7), une section transversale intérieure sensiblement constante, **en ce qu'**est prévu dans la paroi de conduit (4) et, de façon alignée, dans le manchon (5), respectivement un évidement (14) à travers lesquels est guidé le capteur, **en ce qu'**entre la face extérieure du manchon (5) et la paroi de conduit (4) qui l'entoure sont prévus des moyens d'étanchéité (9) et **en ce que** le manchon (5) est formé d'une pièce moulée par injection de matière plastique.

2. Système selon la revendication 1, **caractérisé en ce que** le manchon (5) comporte un boîtier (10) pour le capteur, faisant saillie dans la section transversale d'écoulement et formant une seule pièce avec le manchon (5).

3. Système selon la revendication 2, **caractérisé en ce que** le boîtier (10) présente, sur deux côtés opposés, une découpure (11), **en ce que** le capteur est un capteur de pression différentielle, qui est relié par conduit aux découpures (11) destinées à détecter la pression différentielle entre les découpures (11) et **en ce que** sont prévus à l'intérieur du boîtier (10) des moyens d'étanchéité entre le capteur et le boîtier (10).

4. Système selon l'une des revendications précédentes, **caractérisé en ce que** les moyens d'étanchéité sont formés par deux joints périphériques, disposés entre le manchon (5.1) et la paroi de conduit (4), de préférence des joints toriques (9.1) qui sont mutuellement espacés, au moins le boîtier (10.1) pour le capteur étant disposé entre les joints (9.1).

5. Système selon l'une des revendications précédentes, **caractérisé en ce que** le capteur est logé dans un boîtier de capteur (10) qui fait saillie dans la trajectoire d'écoulement à l'intérieur du manchon (5) et qui repose sur une extrémité d'un carter d'accouplement (12) qui est fixé, de préférence de manière amovible, sur la paroi de conduit (4) et par l'intermédiaire duquel s'effectue la connexion électrique du capteur.

6. Système selon l'une des revendications précédentes, **caractérisé en ce qu'**est formée, dans la région de l'évidement (14) pratiqué dans la paroi de conduit (4), une partie d'un accouplement électrique pour le raccordement du capteur, dont l'autre partie (12) est disposée à l'extrémité du câble de raccordement (13) correspondant.
